# EUROPEAN PATENT APPLICATION

(11) **EP 1 691 505 A2**
(43) Date of publication of application: **16.08.2006**
(21) Application number: 06002467.6
(22) Date of filing: 07.02.2006
(51) Int. Cl.: H04L 12/14

(54) **Method and system for transmitting a multimedia message**

(30) Priority: 07.02.2005 KR 2005011250
(71) Applicant: Samsung Electronics Co., Ltd., Suwon-si, Gyeonggi-Do (KR)
(72) Inventor: Han Jay, Yeongtong-gu Suwon-si Gyeonggi-do (KR)
(74) Representative: Grünecker, Kinkeldey, Stockmair & Schwanhäusser Anwaltssozietät

(57) **Abstract**

A method and system for transmitting a large multimedia message. The method for transmitting a multimedia message includes dividing the large multimedia data to be transmitted into a plurality of divided multimedia data according to a transmission capacity of the mobile station, and forming plurality divided multimedia messages corresponding to the plurality of divided multimedia data. The multimedia messages include division information corresponding to each divided multimedia data. The divided multimedia messages are then ultimately transmitted to a receiver that combines the plurality of divided multimedia data to recover the large multimedia data. Accordingly, a large amount of multimedia data can be transmitted and received through a multimedia messaging service, and a high quality multimedia service can be provided.

## Description

The present invention relates generally to a mobile communication system, and more particularly to a system and a method for transmitting a multimedia message.

As mobile station technology progresses, mobile stations are becoming equipped with a variety of accessory functions in addition to basic communication functions. For example, a digital camera function, a music function, and a movie function have been already included in the mobile station. Based on these functions, a mobile communication system also provides a multimedia messaging service (MMS) for transmitting and receiving content relating to the selected multimedia function. For example, the content included in the multimedia message transmitted and received through the MMS may be a photograph, a movie, or a song file, such as an MP3. In the following description, this type of data, and all other content included in a multimedia message and transmitted through the MMS are referred to as multimedia data.

Multimedia messages are commonly classified into two types. One is a type in which a variety of multimedia data is included in a slide show made through a synchronized multimedia integration language in a multipart/related type. The other is a type in which a variety of multimedia data is made in a multipart/mixed type and inserted into the multimedia messages as attachment files.

However, because multimedia messages made through the two types are wirelessly transmitted through a mobile communication system with limited resources, these multimedia messages cannot exceed a predetermined size. Therefore, it is common for a mobile station create a multimedia message of a suitable size for transmission by compressing the multimedia data.

For example, using high resolution image data exceeding a size that can be transmitted, even after the image data is compressed, e.g., using a compression scheme such as a joint photographic expert group (JPEG), the mobile station often re-compresses the image to a transmittable size, thereby lowering the resolution of the image data or degrading the image quality of the image data.

Such a procedure of re-forming a multimedia message can also be performed in a multimedia messaging service center (MMSC). The MMSC performs overall operations, such as billing and transmission/reception of multimedia messages, between mobile stations and performs an MMS between the mobile station and a variety of multimedia service centers through wireless/wired Internet networks. More specifically, the MMSC stores MMS specifications corresponding to types of terminals in a receiver and reforms a multimedia message according to the MMS specifications. The MMS specifications include information regarding the size of a multimedia message of a corresponding terminal that can be transmitted and received, and information regarding the executable type of multimedia data. Accordingly, if the size of a multimedia message to be transmitted is larger than a mobile station can receive, the MMSC reforms the multimedia message into a size that can be transmitted to the mobile station.

Therefore, it is difficult to receive a high quality multimedia data service through the MMS. For example, although the mobile station having a high-resolution photographing function creates image data having superior image quality, if the image data is transmitted through the MMS, a user may receive an image having an inferior quality as a result. Similarly, even when a predetermined service provider provides a service in which image data received through the MMS is developed to a picture to be provided to a user, as an example of providing a multimedia message service through a multipart/mixed scheme, a picture having an inferior quality is inevitably provided.

In addition, because the sound source data and the movie data can be transmitted only when the sound source data and the movie data have sizes smaller than the size of multimedia message which can be transmitted, sound having degraded quality or a moving picture having a shorter length often must be provided.

Accordingly, the present invention has been designed to solve the above and other problems occurring in the prior art.

The object of the present invention is to provide a method and a system for transmitting a multimedia message including a large amount of multimedia data.

This object is solved by the subject matter of the independent claims.

Preferred embodiments are defined in the dependent claims.

An aspect of the present invention is to provide a method and a system for transmitting a multimedia message providing a high quality image file.

Another aspect of the present invention is to provide a method and a system for transmitting a multimedia message providing a high quality sound source.

Still another aspect of the present invention is to provide a method and a system for transmitting a multimedia message providing a high quality movie.

To accomplish the above, there is provided a method for transmitting a multimedia message of a mobile station. The method includes the steps of dividing multimedia data to be transmitted into a plurality of divided multimedia data according to a transmission capacity for multimedia messages of the mobile station, and forming a plurality of divided multimedia messages corresponding to the plurality of divided multimedia data, such that the multimedia message includes division information corresponding to each divided multimedia data, and transmitting the plurality of divided multimedia messages.

According to another aspect of the present invention, there is provided a system for transmitting a multimedia message. The system includes a mobile station for dividing original multimedia data to be transmitted into plurality of divided multimedia data according to a multimedia message transmission allowance size, forming a plurality of divided multimedia messages corresponding to the plurality of divided multimedia data, such that each of the multimedia messages includes division information corresponding to each divided multimedia data, transmitting the divided multimedia messages, and combining the plurality of divided multimedia data included in the plurality of divided multimedia messages to recover the original multimedia data based on the division information included in the divided multimedia messages, and a multimedia messaging service center for combining, re-dividing, and transmitting the plurality of divided multimedia messages according to a transmission capacity for a multimedia message of a receiver by recognizing the receiver if the plural divided multimedia messages are received.

The present invention will be more apparent from the following detailed description taken in conjunction with the accompanying drawings, in which:
FIG. 1 illustrates a mobile communication system according to an embodiment of the present invention;
FIG. 2 is a block diagram illustrating a mobile station according to an embodiment of the present invention;
FIG. 3A illustrates a divided multimedia message having a header field including a division information field according to an embodiment of the present invention;
FIG. 3B illustrates a divided multimedia message having a data field including a division information field according to an embodiment of the present invention;
FIG. 4 illustrates a division information field according to an embodiment of the present invention;
FIG. 5 is a flowchart illustrating an operation of a mobile station in a transmitter side according to an embodiment of the present invention;
FIG. 6 is a flowchart illustrating an operational procedure of an MMSC according to an embodiment of the present invention; and
FIG. 7 is a flowchart illustrating an operational procedure of a reception mobile station according to an embodiment of the present invention.

Hereinafter, preferred embodiments of the present invention will be described in detail with reference to the accompanying drawings. It is noted that the same or similar components in drawings are designated by the same reference numerals, although they are shown in different drawings. Additionally, in the following description of the present invention, a detailed description of known functions and configurations incorporated herein will be omitted when it may obscure the subject matter of the present invention.

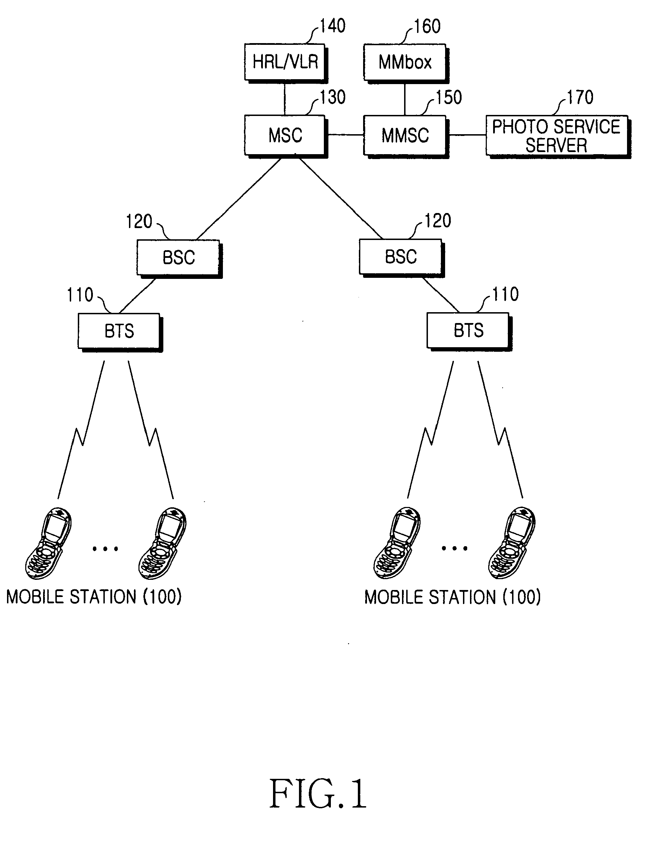

FIG. 1 illustrates a mobile communication system according to the present invention. Referring to FIG. 1, the mobile communication system includes mobile stations 100, base transceiver stations (BTSs) 110, base station controllers (BSCs) 120, a mobile switching center (MSC) 130, a home location register/visitor location register (HLRNLR) 140, a multimedia messaging service center (MMSC) 150, and a multimedia message box (MM box) 160.

The BTS 110 communicates with each of the mobile stations 100 wirelessly for an interval.

The BSC 120 controls a wireless link and a wired link, performs a handoff function that enables a subscriber to maintain continuous communication while moving, and transmits to the MSC 130 location data and state data of the mobile stations 100 received from the BTSs 110.

The MSC 130 may connect to another MSC in order to process a data transmission/reception request delivered from the mobile stations 100 and inquires information about the subscriber from the HLRNLR 140. In addition, the MSC 130 stores in the HLRNLR 140 state data and location information according to location registration received from the BSC 120.

Preferably, the HLRNLR 140 includes a middle-sized computer mainly for processing subscriber information.

The MM box 160, which is a mass storage server, is a multimedia message storage server for storing multimedia messages transmitted from the subscribers. The subscribers store or delete predetermined multimedia messages in or from the MM box 160. In addition, the subscribers may download multimedia messages stored in the MM box 160, or transmit multimedia messages to another mobile station or the multimedia service server. The multimedia service server, which is a mass storage server, provides various types of services through the MMS. The management of multimedia messages stored in the MM box 160, such as the storage, deletion, or transmission of subscriber multimedia messages is achieved through the MMSC 150.

Each of the mobile stations 100 communicate with a BTS 110 wirelessly for an interval and perform a variety of communication services provided by the mobile communication system. In addition, the mobile stations 100 perform a multimedia messaging service (MMS). Accordingly, the mobile stations 100 divide and transmit a large amount of multimedia data into a plurality of multimedia messages having sizes which can be transmitted according to the present invention.

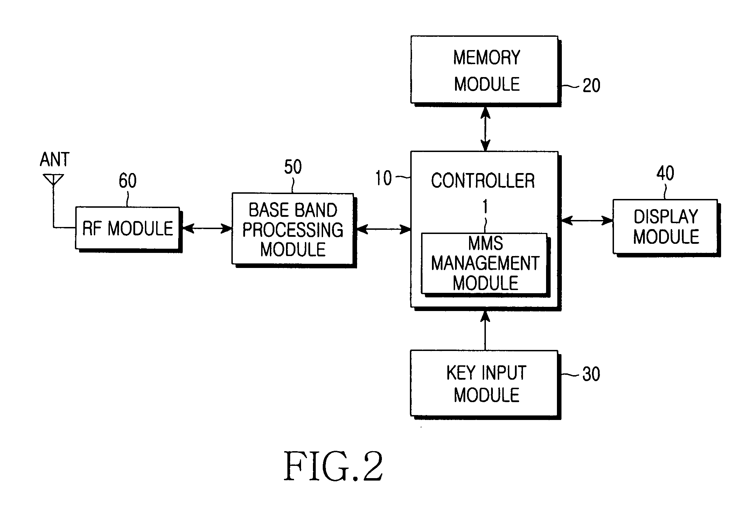

FIG. 2 is a block diagram illustrating a mobile station 100 according to the present invention. Referring to FIG. 2, the mobile station 100 includes a controller 10, a memory module 20, a key input module 30, a display module 40, a base band processing module 50, and an RF module 60.

For example, the key input module 30 includes numeric keys of 0 to 9, a " * " key, a "#" key, direction keys, and a plurality of function keys such as a menu key, a selection key, a communication key, a deletion key, a power on/off key, a volume key, etc., corresponding to a variety of functions supported by the mobile station. In addition, the key input module 30 provides key input data corresponding to a key pressed by a user to the controller 10.

The display module 40 displays various image information and data information received from the BTS 110 or stored in the memory module 20 on a screen of the mobile station under the control of the controller 10.

The RF module 60 transmits and receives radio signals to and from the BTS 110 through an antenna. The RF module 60 modulates a signal to be transmitted input from the controller through the base band processing module 50 in order to transmit an RF signal through the antenna and demodulates an RF signal received through the antenna in order to provide the RF signal to the controller 10.

The base band processing module 50 processes a base band signal transmitted and received between the RF module 60 and the controller 10.

The memory module 20 stores programs for supporting processing and controlling operations of the controller 10, reference data, a variety of storage data that can be updated, and various types of multimedia data. The memory module 20 operates as a working memory of the controller 10.

As described above, multimedia data refers to data included in a multimedia message to be transmitted when the MMS is performed. For example, the multimedia data includes sound source data, i.e., music, movie data, image data, e.g., photographs, and text data.

The memory module 20 according to the present invention stores program data required when the MMS is performed according to the present invention. In addition, the memory module 20 stores, according to a type of the mobile station 100, information about the transmission capacity of a multimedia message. The transmission capacity is dependent on the type of mobile station or limits set by a mobile communication provider.

The controller 100 includes an MMS management module 1 and controls all functions of the mobile station, such as a telephone communications, a data communications, etc., of the mobile station. The MMS management module 1 controls an overall operation performed in the MMS. The MMS management module according to the present invention determines if multimedia data to be transmitted has an allowed transmission size. If the size of the multimedia data is within the allowable transmission size, one multimedia message including the multimedia data is formed. However, if the size of the multimedia data exceeds the allowed transmission size, the multimedia data to be transmitted, i.e., mass storage multimedia data, is divided into a plurality of divided multimedia data. Thereafter, a plurality of divided multimedia messages including the divided multimedia data and division information are formed.

For example, the multimedia data that exceeds the allowed transmission size denotes multimedia data having a size larger than a data transmission capacity of the mobile station 100.

In addition, if the MMS management module 1 receives the divided multimedia messages, the MMS management module 1 combines the divided multimedia data based on the division information included in the divided multimedia messages in order to recover the original multimedia data.

According to the present invention, the MMS management module 1 adds a division information field to contain the division information, when making the divided multimedia message. The division information indicates that a corresponding divided multimedia message includes one of a plurality of divided multimedia data obtained by dividing a larger amount of multimedia data. The division information represents the type of the original amount of multimedia data, information for identifying the original amount of multimedia data, and information about a position of the divided multimedia data in the original multimedia data.

The division information field may be inserted into the conventional header field of a multimedia message according to an embodiment of the present invention, or may be inserted to a text field of the conventional data fields.

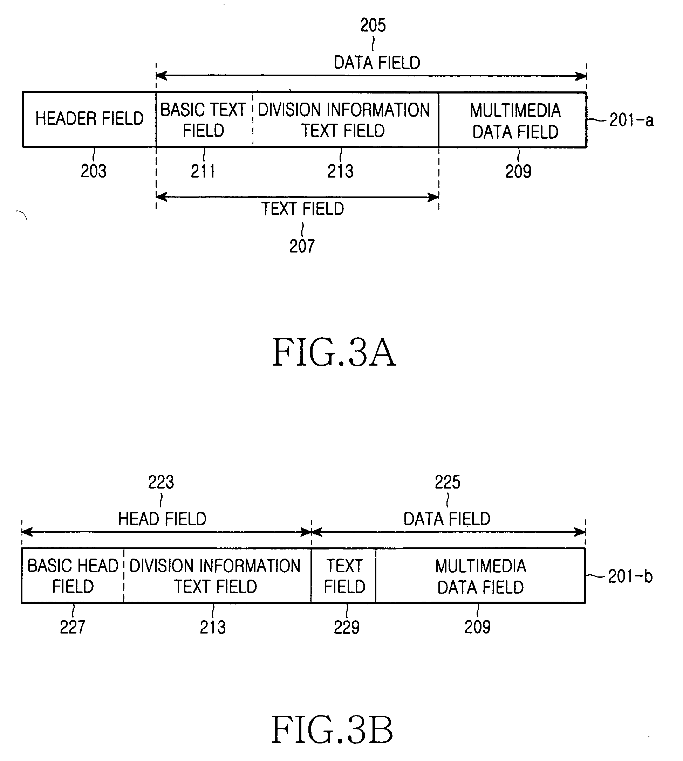

FIGs. 3A and 3B illustrate divided multimedia messages according to embodiments of the present invention. More specifically, FIG. 3A illustrates a divided multimedia message having a header field including the division information field according to an embodiment of the present invention, and FIG. 3B illustrates a divided multimedia message having a data field including a division information field according to another embodiment of the present invention.

Referring to FIG. 3, a first divided multimedia message 201-a includes a header field 203 and a data field 205. The header field 203 stores header information stored in a header field of a typical multimedia message. The data filed 205 includes a text field 207 having a basic text field 211 and a division information text field 213 and a multimedia data field 209. The basic text field 211 stores text information regarding multimedia data to be transmitted. For example, the basic text field 211 stores text information regarding the name of the multimedia data and the description about the multimedia data, the division information field 213 stores the division information, and the multimedia data field 209 stores divided multimedia data to be actually transmitted through the divided multimedia message.

As described above, in the first divided multimedia message 201-a, because the division information field 213 is inserted into the typical text field 207, an MMS may be made without changing the structure of the convention multimedia message. That is, the MMSC 150 recognizes the first divided multimedia message 201-a as a typical multimedia message instead of a divided multimedia message, thereby transmitting the first divided multimedia message 201-a to a receiver according to the conventional procedure.

In addition, a divided multimedia message may be constructed as illustrated in a second divided multimedia message 201-b of FIG. 3B, according to another embodiment of the present invention. The second divided multimedia message 201-b includes a header field 223 and a data filed 225. The header field 223 includes a basic header field 227 and a division information field 213. The data field 225 includes a text field 229 and a multimedia data field 209. The basic header field 227 stores typical header information about a multimedia message. The division information field 213 stores the division information. The text field 229 stores text information regarding multimedia data to be transmitted. For example, the text field 229 stores text information regarding the name of the multimedia data and the description about the multimedia data.

In the second divided multimedia message 201-b, because the division information field 213 according to the present invention is inserted into the conventional header field 223, the MMSC 150 may recognize the second divided multimedia message 201-b as a divided multimedia message. Accordingly, if the MMSC 150 receives the second divided multimedia message 201-b, the MMSC 150 may make and transmit a mass storage original multimedia message by combining a plurality of divided multimedia messages according to receivers. The MMSC 150 may make and transmit a plurality of new divided multimedia messages according to MMS specifications of a terminal in the receiver side.

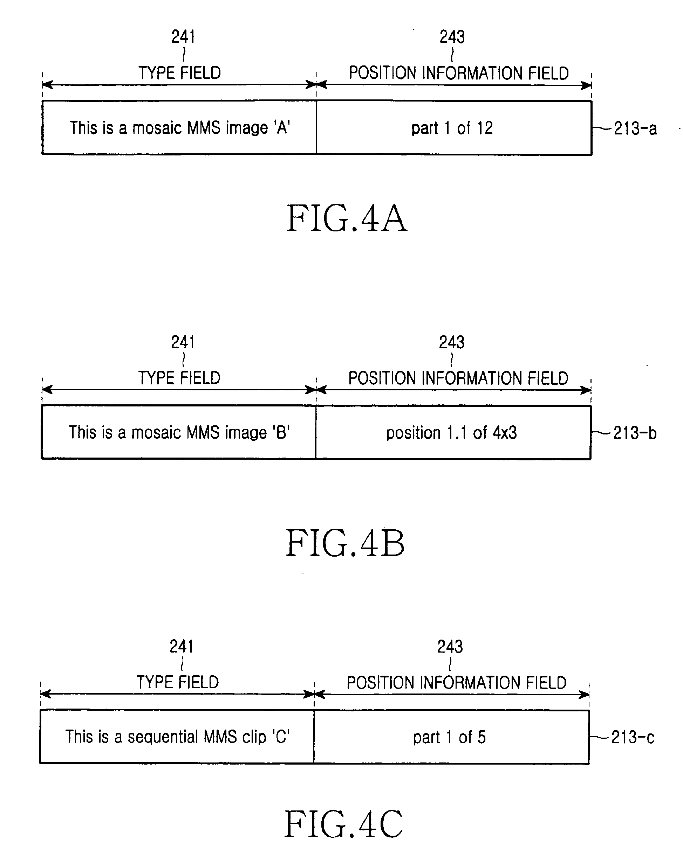

FIG. 4 illustrates the structure of the division information field 213 according to the present invention, including a type information field 241 and a position information field 243. The type information field 241 stores a type of the division multimedia data and division information for a great amount of multimedia data before division, and the position information field 243 stores information indicating the position of the division multimedia data in an original multimedia data. Each of the division information fields 213-a, 213-b, and 213-c illustrated in FIG. 4 represents the division information field 213 including the type information field 241 and the position field 243 having different information according to the division information fields according to an embodiment of the present invention.

In the first division information field 213-a, the type information field 241 stores information in the format of "This is a mosaic MMS image 'A'", thereby indicating that division multimedia data to be transmitted is a part of a large image data of 'A'. In addition, the position information field 243 stores information in the format of "part 1 of 12", thereby indicating that division multimedia data to be transmitted is the first multimedia data of the total 12 division multimedia data.

In the second division information field 213-b, the type information field 241 stores information in the format of "This is a mosaic MMS image 'B'", thereby indicating that division multimedia data to be transmitted is a part of a large image data of 'B'. In addition, the position information field 243 stores information "position 1.1 of 4 × 3" therein, thereby indicating that division multimedia data to be transmitted are multimedia data positioned at the first row and the first column from among 12 division multimedia data in the form of four rows and three columns.

In the third division information field 213-c, the type information field 241 stores information "This is a sequential MMS clip 'C'", thereby indicating that division multimedia data to be transmitted is a part of sequential multimedia data such as a large audio file or a large moving file. In addition, the position information field 243 stores information "part 1 of 5", thereby indicating that division multimedia data to be transmitted is the first multimedia data from among the total five division multimedia data.

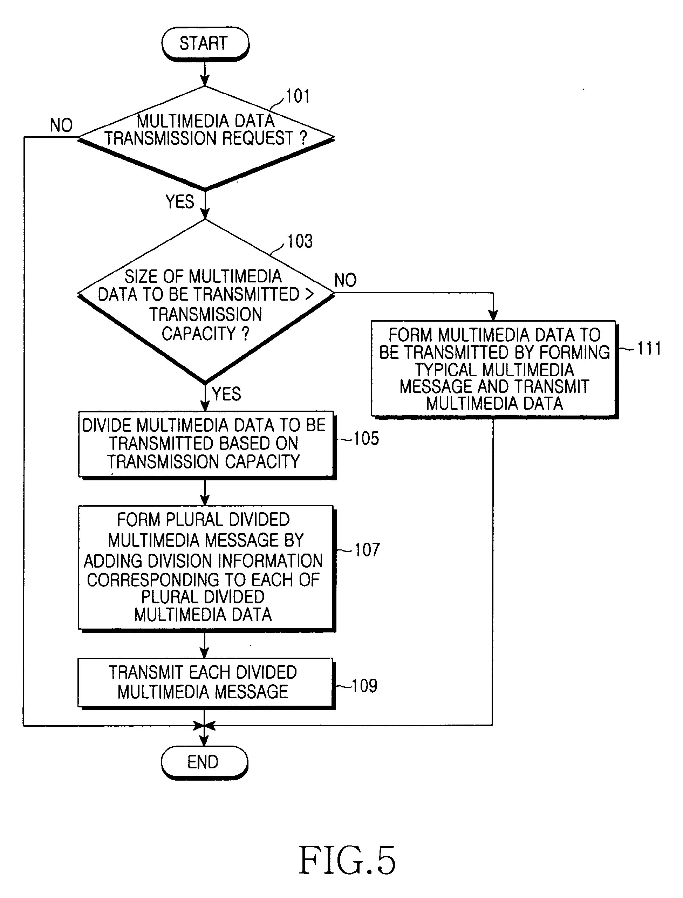

FIG. 5 is a flowchart illustrating an operation of the mobile station 100 in a transmitter side according to an embodiment of the present invention. Referring to FIG. 5, the controller 10 of the mobile station 100 determines if the transmission of a multimedia message is requested in step 101. If transmission of the multimedia message has been requested, the controller 10 determines if the size of multimedia data to be transmitted is larger than a previously stored transmission capacity in step 103. That is, the controller 10 determines if the multimedia data to be transmitted is too large an amount of multimedia data to be transmitted in a single message. If it is determined that the size of multimedia data to be transmitted is larger than the transmission capacity, the controller proceeds to step 105. However, if it is determined that the size of multimedia data to be transmitted is smaller than or equal to the transmission capacity, in step 111, because the size of multimedia data to be transmitted is smaller than or equal to the allowed transmission size, the controller 10 makes and transmits a typical multimedia data including the multimedia data to be transmitted and then terminates the operational procedure of transmitting the multimedia data.

In step 105, the controller 10 divides multimedia data to be transmitted into a plurality of data according to the transmission capacity. For example, if a large amount of image data is divided according to the allowable transmission size, stored compressed original image data is uncompressed so that the size of original image data can be recovered, and then a compression rate of the image data is calculated in order to divide image data based on the transmission allowance size. Thereafter, the divided image data is compressed to create final divided image data. The controller 10 forms a plurality of divided multimedia messages by adding division information corresponding to a plurality of divided multimedia data in step 107. That is, the controller 10 marks the division information field 213 with the position of the divided image data and information representing that the divided image data are a part of the larger image data and then forms the divided multimedia messages including the divided multimedia data. The divided multimedia message may have the same structure as the first divided multimedia message 201-a or the second divided multimedia message 201-b according to an embodiment of the present invention.

In step 109, the controller 10 transmits each divided multimedia message and then terminates the operational procedure.

In FIG. 1, a divided multimedia message transmitted from a mobile station 100 according to the operational procedure is transmitted to the MMSC 150 through a BTS 110, a BSC 120, and the MSC 130. The MMSC 150 performs overall operations such as billing and transmission/reception of multimedia messages between mobile stations according to MMSs and performs an MMS between the mobile station 100 and a variety of multimedia service servers through wireless/wired Internet networks.

Hereinafter, a case in which the division information field 213 is inserted into the header field 203, as the second divided multimedia message 201-b, in the procedure of processing divided multimedia messages will be described.

The MMSC 150 determines based on the header information of a multimedia message that the multimedia message is a divided multimedia message. Then, the MMSC 150 modifies and transmits the multimedia data according to the type of the multimedia message and the type of a receiver based on previously stored MMS specification information for the receiver. That is, if the receiver of the multimedia message is a mass storage service server and if a typical multimedia message must be transmitted, the MMSC 150 transmits the multimedia message without modification of the multimedia message. Herein, the mass storage service server can transmit/receive and store multimedia messages regardless of the sizes of the multimedia messages as a multimedia service server or the MM box 160.

If the receiver of the multimedia message is a predetermined mobile station 100 and if a typical multimedia message must be transmitted, the MMSC 150 transmits the multimedia message by adjusting the size of the typical multimedia message to the size which can be received in the mobile station 100 at once or by changing the type of multimedia data included in the typical multimedia message into an executable type in the mobile station 100 according to the previously stored MMS specification information of the mobile station 100.

When a plurality of divided multimedia messages are transmitted according to the present invention, if the mass storage service server corresponds to the receiver, the MMSC 150 forms one multimedia message by combining a plurality of divided multimedia data according to the division information included in the divided multimedia messages. The MMSC 150 manages the combined plurality of multimedia messages as one logical message.

In addition, if a mobile station in the receiver of the divided multimedia message has MMS specifications different from a mobile station in a transmitter, the MMSC 150 reforms a divided multimedia message to be transmitted according to the M MS specifications of the mobile station in the receiver. That is, the M MSC 150 recovers a great amount of multimedia data by combining divided multimedia data included in each divided multimedia message according to each division information and then forms a new divided multimedia message by re-dividing the recovered multimedia data according to the MMS specifications of the mobile station in the receiver. Accordingly, the number of transmitted divided multimedia messages may actually be different from the number of received divided multimedia messages even though the same amount of multimedia data is transmitted and received.

In addition, if the mobile station requests that the MMSC 150 transmit a multimedia message stored in the MM box 160 to a predetermined mobile station, the MMSC 150 transmits the multimedia message by forming a plurality of divided multimedia messages according to the MMS specifications of the reception mobile station. If the reception mobile station receives the divided multimedia messages, the reception mobile station recovers the original multimedia data by combining the divided multimedia data based on division information included in each multimedia message.

In processing the divided multimedia messages by the MMSC 150, when the divided multimedia messages have the same structure in which the division information field 203 thereof is inserted into the data field 225, as in the first divided multimedia message 201-a, the multimedia messages are processed as a typical multimedia message. The combination of all divided multimedia messages is performed in the receiver according to an embodiment of the present invention. That is, the mass storage service server and the mobile station combine a plurality of divided multimedia messages according to the present invention.

For example, if the receiver is a photo-service server 170, as illustrated in FIG. 1, the photo-service server 170 combines a plurality of received divided multimedia messages according to division information in order to recover original multimedia data. The photo-service server 170 is an example of a multimedia service server for providing a subscriber with a variety of services using multimedia data included multimedia messages. That is, the photo-service server is an example of a mass storage server.

If the photo-service server 170 receives the multimedia messages from a user, the photo-service server 170 performs a photo-service of developing image data included in the received multimedia message to a real picture and providing the developed picture to the user through a mail. In addition, if the photo-service server 170 receives divided multimedia messages according to the present invention, the photo-service server 170 combines divided image data into original image data based on division information included in the divided multimedia messages, thereby performing the photo-service.

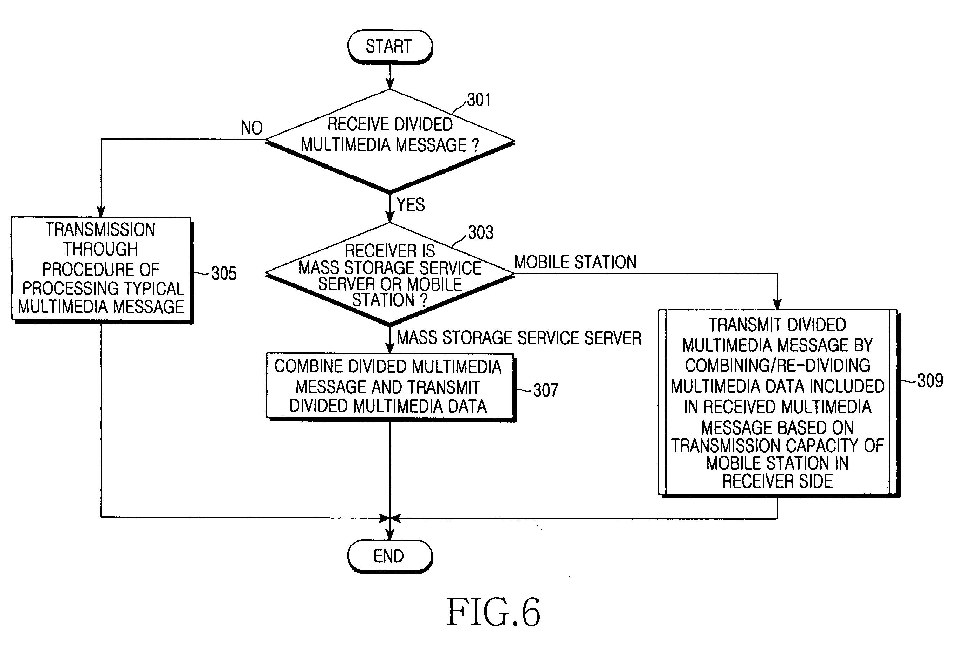

FIG. 6 is a flowchart illustrating an operational procedure of the MMSC 150 according to an embodiment of the present invention. Referring to FIG. 6, if the MMSC 150 receives a divided multimedia message in step 301, the MMSC 150 proceeds to step 303. However, if the MMSC 150 receives a typical multimedia message, the MMSC 150 proceeds to step 305.

More specifically, if the MMSC 150 receives a divided multimedia message having a structure as the second divided multimedia message 201-b, the MMSC 150 recognizes the divided multimedia message. If the MMSC 150 receives a divided multimedia message having the structure as the first divided multimedia message 201-a or a typical multimedia message, in step 305, the MMSC 150 processes the divided multimedia message as the typical multimedia message and then terminates the operational procedure.

However, in step 303, the MMSC 150 determines if the receiver is a mass storage service server or a mobile station. If the receiver is the mass storage service server, the MMSC 150 combines divided multimedia data based on division information included in the divided multimedia message in order to transmit the combined multimedia data to the mass storage server in step 307, and then terminates the operation procedure.

If the receiver is a mobile station, in step 309, the MMSC 150 combines and re-divides multimedia data included in the divided multimedia message according to the MMS specifications of the mobile station in the receiver in order to transmit the multimedia data to the mobile station in the receiver.

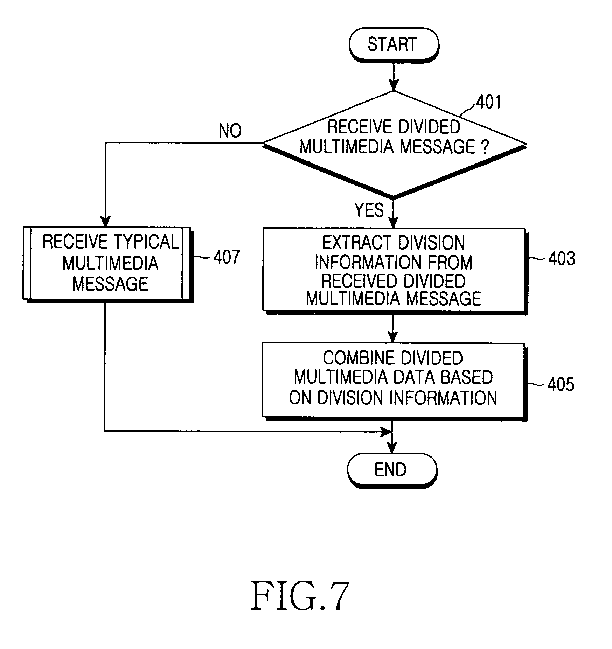

FIG. 7 is a flowchart illustrating an operational procedure of the reception mobile station according to an embodiment of the present invention. Referring to FIG. 7, in step 401, the reception mobile station determines if a received multimedia message is a divided multimedia message. If the received multimedia message is not the divided multimedia message, in step 407, because the received multimedia message is a typical multimedia message instead of the divided multimedia message, the reception mobile station processes the received multimedia message according to a procedure for processing the typical multimedia message.

However, if the received multimedia message is the divided multimedia message, in step 403, the reception mobile station extracts division information included in the received divided multimedia message. In step 405, the reception mobile station recovers the original multimedia data by combining divided multimedia data based on division information and then terminates the operational procedure.

As described above, according to the present invention, because a large amount of multimedia data is divided and transmitted using a plurality of multimedia messages, a receiver can receive high quality multimedia data. For example, using image data, the receiver can receive the image data having original resolution and original image quality. Further, it is possible to transmit and receive high quality sound and a high quality movies.

As described above, according to the present invention, a large amount of multimedia data is divided into a plurality of multimedia data according to the transmission capacity of a multimedia message of a mobile station, and a plurality of multimedia messages including the divided multimedia data, are formed and transmitted, such that the large amount of the multimedia data can be received through multimedia messaging service and a high quality multimedia service can be provided.

While the present invention has been shown and described with reference to certain preferred embodiments thereof, it will be understood by those skilled in the art that various changes in form and details may be made therein without departing from the scope of the present invention. Accordingly, the scope of the present invention should not be limited to the above-described embodiments, but should be defined by the appended claims.

## Claims

1. A method for transmitting a multimedia message in a mobile communication system, the method comprising the steps of:
dividing original multimedia data to be transmitted into a plurality of divided multimedia data according to a transmission capacity for a multimedia message of a mobile station;
forming plurality of divided multimedia messages corresponding to the plurality of divided multimedia data, the plurality of divided multimedia messages including division information corresponding to each of the plurality of divided multimedia data; and
transmitting the plurality of divided multimedia messages.

2. The method as claimed in claim 1, wherein the division information includes information about a position of a corresponding divided multimedia data in the original multimedia data to be transmitted and information representing that the corresponding multimedia data is part of the original multimedia data to be transmitted.

3. The method as claimed in claim 1 or 2, wherein the division information is stored in a header field of each of the divided multimedia messages.

4. The method as claimed in one of claims 1 to 3, wherein the division information is stored in a data field of each of the divided multimedia messages.

5. The method as claimed in one of claims 1 to 4, further comprising the steps of:
receiving the plurality of divided multimedia messages; and
combining the plurality of divided multimedia data included in the plurality of divided multimedia messages into the original multimedia data using the division information included in the divided multimedia messages.

6. A method for transmitting a multimedia message in a mobile communication system, the method comprising the steps of:
dividing original multimedia data to be transmitted by a mobile station into a plurality of divided multimedia data according to a transmission capacity for a multimedia message of the mobile station;
forming a plurality of divided multimedia messages corresponding to the plurality of divided multimedia data, the plurality of multimedia messages including division information corresponding to each of the plurality of divided multimedia data;
transmitting the divided multimedia messages;
receiving the plurality divided multimedia messages in a multimedia messaging service center;
combining the plurality of divided multimedia data included in the received plurality of divided multimedia messages;
re-dividing the combined multimedia data into a second plurality of divided multimedia data according to a transmission capacity of a receiver;
forming a second plurality of divided multimedia messages corresponding to the second plurality of divided multimedia data, the second plurality of multimedia messages including division information corresponding to each the second plurality of divided multimedia data; and
transmitting the second plurality of multimedia messages to the receiver.

7. The method as claimed in claim 6, further comprising the steps of:
determining if the transmission capacity for the multimedia message of the receiver is different from the transmission capacity for the multimedia message of the mobile station;
transmitting the plurality of divided multimedia messages to the receiver without performing the steps of combining the plurality of divided multimedia data, re-dividing the combined multimedia data, and forming the second plurality of divided multimedia messages, if the transmission capacity for the multimedia message of the receiver is identical to the transmission capacity for the multimedia message of the mobile station; and
performing the steps of combining the plurality of divided multimedia data, re-dividing the combined multimedia data, and forming the second plurality of divided multimedia messages, if the transmission capacity for the multimedia message of the receiver is different from the transmission capacity for the multimedia message of the mobile station.

8. A system for transmitting a multimedia message, the system comprising:
a mobile station for dividing original multimedia data to be transmitted into plurality of divided multimedia data according to a transmission capacity of the mobile station, forming a plurality of divided multimedia messages corresponding to the plurality of divided multimedia data, the plurality of multimedia messages including division information corresponding to each of the plurality of divided multimedia data, and transmitting the divided multimedia messages.

9. The system as recited in claim 8, further comprising:
a receiver for receiving the plurality of divided multimedia messages, combining the plurality of divided multimedia data included in the plurality of divided multimedia messages to recover the original multimedia data based on the division information included in the divided multimedia messages.

10. The system as recited in claim 9, further comprising:
a multimedia messaging service center for receiving the divided multimedia messages from the mobile station, determining if a transmission capacity for the receiver is identical to the transmission capacity for the mobile station, and transmitting the divided multimedia messages to the receiver if the transmission capacities are identical.

11. The system as recited in one of claims 8 to 10, further comprising:
a multimedia messaging service center for receiving the plurality divided multimedia messages, determining if a transmission capacity for a receiver is identical to the transmission capacity for the mobile station, if the transmission capacity for the receiver is not identical to the transmission capacity for the mobile station, combining the plurality of divided multimedia data in the received plurality of divided multimedia messages, re-dividing the combined multimedia data into a second plurality of divided multimedia data according to the transmission capacity of the receiver, forming a second plurality of divided multimedia messages corresponding to the second plurality of divided multimedia data, the second plurality of multimedia messages including division information corresponding to each the second plurality of divided multimedia data, and transmitting the second plurality of multimedia messages; and
the receiver for receiving the second plurality of divided multimedia messages, combining the second plurality of divided multimedia data included in the second plurality of divided multimedia messages to recover the original multimedia data based on the division information included in the second divided multimedia messages.
